# DEMANDE DE BREVET EUROPEEN

(11) **EP 2 540 569 A1**
(43) Date de publication de la demande: **02.01.2013**
(21) Numéro de dépôt: 12173235.8
(22) Date de dépôt: 22.06.2012
(51) Int. Cl.: B60Q 1/30, B60Q 1/00, B60Q 1/48

(54) **Procédé de fonctionnement d'un dispositif de signalisation d'un véhicule automobile**

(30) Priorité: 30.06.2011 FR 1155903
(71) Demandeur: VALEO VISION, 93012 Bobigny Cedex (FR)
(72) Inventeur: Albou, Pierre, 75013 PARIS (FR); Puente, Jean-Claude, 93190 LIVRY GARGAN (FR); Godbillon, Vincent, 75011 PARIS (FR)

(57) **Abrégé**

Procédé de fonctionnement d'un dispositif (10) de signalisation d'un véhicule automobile, le dispositif comprenant une première source de lumière (16) assurant une fonction de signalisation du véhicule, un capteur de lumière (12, 13) et des moyens (14, 15) d'activation de la première source de lumière, caractérisé en ce que le procédé comprend les étapes suivantes :
- détecter, grâce au capteur de lumière, des rayons lumineux se propageant selon au moins une direction dans un premier sens, puis,
- dans ce cas, activer la première source de lumière de sorte à ce qu'elle émette des rayons lumineux se propageant selon l'au moins une direction dans un deuxième sens opposé au premier sens.

## Description

La présente invention concerne un dispositif de signalisation d'un véhicule automobile. L'invention concerne aussi un procédé de fonctionnement d'un tel dispositif.

La réglementation impose que les véhicules automobiles soient équipés de dispositifs à catadioptres permettant de signaler les véhicules lorsque des rayons lumineux sont dirigés vers eux. Néanmoins, de tels dispositifs à catadioptres génèrent des problèmes de conception. Notamment, il n'est pas aisé d'obtenir des dispositifs à catadioptres présentant des surfaces fortement galbées et/ou inclinées. En outre, les catadioptres imposent l'aspect des dispositifs. Il serait intéressant de réaliser des dispositifs de signalisation ayant des surfaces complexes de sorte à pouvoir épouser la forme de la carrosserie aux lieux d'implantation des dispositifs de signalisation, sans toutefois présenter un encombrement important en arrière de ceux-ci.

Dans le domaine des panneaux de signalisation routière, on connaît du document US 2004/226 601 un dispositif autonome permettant l'éclairage d'un panneau de signalisation uniquement la nuit ou uniquement en présence de véhicule. Le dispositif utilise un moyen photovoltaïque pour recharger une batterie d'alimentation de l'éclairage.

Le but de l'invention est de fournir un dispositif de signalisation remédiant aux inconvénients précédemment mentionnés et améliorant les dispositifs de signalisation connus de l'art antérieur.

En particulier, l'invention propose un dispositif de signalisation simple, qui peut présenter des surfaces variées, notamment des surfaces à galbes prononcés et fortement évolutifs et qui présente un aspect visuel différent de celui d'un catadioptre, tout en assurant les fonctions d'un dispositif à catadioptre. La photométrie du faisceau obtenu respecte les contraintes de photométrie que doit respecter un faisceau de signalisation obtenu par un catadioptre. Ces contraintes sont par exemple les contraintes fixées par voie réglementaire. Selon une variante, la photométrie du faisceau obtenu correspond à la photométrie d'un faisceau de signalisation obtenu par un catadioptre. L'invention porte aussi sur un procédé de fonctionnement d'un tel dispositif.

Le procédé selon l'invention régit le fonctionnement d'un dispositif de signalisation d'un véhicule automobile. Le dispositif comprend une première source de lumière assurant une fonction de signalisation du véhicule, un capteur de lumière et des moyens d'activation de la première source de lumière. Le procédé comprend les étapes suivantes :
- détecter, grâce au capteur de lumière, des rayons lumineux se propageant selon au moins une direction dans un premier sens, puis,
- dans ce cas, activer la première source de lumière de sorte à ce qu'elle émette des rayons lumineux se propageant selon l'au moins une direction dans un deuxième sens opposé au premier sens.

Ainsi, il est possible de réaliser un dispositif de signalisation fonctionnant comme un système à catadioptres, sans utiliser de catadioptre et donc possible de s'affranchir des contraintes imposées par les catadioptres.

Le procédé peut comprendre préalablement à l'étape d'activation de la première source de lumière, une étape de définition ou de détermination des conditions d'alimentation électrique de la première source de lumière. Ainsi, il est possible de moduler l'intensité lumineuse émise en fonction de l'environnement dans lequel se trouve le véhicule automobile.

Les conditions d'alimentation électrique de la première source de lumière peuvent dépendre de l'intensité lumineuse des rayons lumineux détectés et/ou de l'intensité lumineuse ambiante et/ou de l'intensité lumineuse moyenne des rayons lumineux détectés au cours d'une période antérieure. Cela permet par exemple de ne pas émettre de lumière lorsque le véhicule automobile se trouve dans un environnement éclairé, en particulier éclairé par la lumière du jour.

Les conditions d'alimentation électrique de la première source de lumière peuvent être telles que l'intensité lumineuse des rayons lumineux émis par la première source dépend, selon une fonction croissante, par exemple proportionnelle ou affine, de l'intensité lumineuse des rayons lumineux détectés par le capteur. Ainsi, il est possible de reproduire plus finement le fonctionnement d'un catadioptre.

Les conditions d'alimentation électrique de la première source de lumière peuvent être telles que l'intensité lumineuse des rayons lumineux émis par la première source dépend, selon une fonction croissante, par exemple proportionnelle ou affine, de la différence entre l'intensité lumineuse courante des rayons lumineux détectés par le capteur et l'intensité lumineuse moyenne des rayons lumineux détectés au cours d'une période antérieure. Ainsi, il est possible d'économiser l'énergie permettant d'émettre les rayons lumineux en ne répondant qu'à la lumière incidente provenant d'un autre véhicule ou usager de la route.

La première source de lumière peut ne pas être activée tant que l'intensité lumineuse ambiante est supérieure à un seuil déterminé. Dans ce cas, le fonctionnement est différent de celui d'un catadioptre classique. En effet un catadioptre classique fonctionne même en cas de forte luminosité ambiante, bien que cela soit peu utile.

On peut utiliser la première source de lumière, en particulier une diode de la première source de lumière, comme moyen de charge d'un moyen de stockage d'énergie électrique. Ceci permet d'éviter une liaison permanente à la batterie du véhicule en amont de l'interrupteur de contact et/ou de donner une autonomie étendue voire infinie au dispositif en cas de la défaillance de la batterie du véhicule.

On peut utiliser la première source de lumière, en particulier une diode de la première source de lumière, ou une deuxième source de lumière, en particulier une diode de la deuxième source de lumière, pour réaliser l'étape de détecter des rayons lumineux se propageant selon au moins une direction dans un premier sens, ledit capteur de lumière comprenant ladite première source de lumière ou ladite deuxième source de lumière. Ceci permet de limiter le nombre de composants du dispositif de signalisation et donc son coût. La deuxième source de lumière peut être une source contribuant à générer un feu de signalisation de freinage ou un feu de signalisation latérale.

La première source de lumière ou la deuxième source de lumière peut être utilisée comme capteur de lumière pendant une période de durée déterminée, à intervalle de durée déterminée.

La première source de lumière ou la deuxième source de lumière peut être utilisée comme capteur de lumière tant qu'elle ne doit pas être activée pour émettre de la lumière ou pour recharger un moyen de stockage d'énergie électrique.

L'invention porte également sur un support d'enregistrement de données lisible par un calculateur sur lequel est enregistré un programme informatique comprenant des moyens de codes de programme informatique de mise en oeuvre des étapes du procédé défini précédemment.

Selon l'invention, le dispositif permet de signaler un véhicule automobile. Le dispositif comprend une première source de lumière assurant une fonction de signalisation du véhicule, un capteur de lumière et des moyens d'activation de la première source de lumière. Les moyens d'activation activent la première source de lumière lorsque le capteur de lumière détecte la présence de rayons lumineux.

Le dispositif de signalisation peut comprendre des moyens matériels et/ou logiciels de mise en oeuvre du procédé défini précédemment.

La première source de lumière peut comprendre une diode électroluminescente, par exemple une diode électroluminescente organique.

Selon l'invention, un programme informatique comprend un moyen de code de programme informatique adapté à la réalisation des étapes du procédé défini précédemment, lorsque le programme est exécuté sur un ordinateur. Par « ordinateur », on entend aussi un calculateur, un processeur, un microcalculateur ou tout autre système logique de commande.

Un autre objet de l'invention est un véhicule automobile comprenant un dispositif de signalisation défini précédemment.

Le dessin annexé représente, à titre d'exemples, deux modes de réalisation d'un dispositif de signalisation d'un véhicule automobile selon l'invention.
La figure 1 est un premier schéma de principe d'un premier mode de réalisation d'un dispositif de signalisation selon l'invention.
La figure 2 est un deuxième schéma de principe du premier mode de réalisation d'un dispositif de signalisation selon invention.
La figure 3 est un premier schéma de principe d'un deuxième mode de réalisation d'un dispositif de signalisation selon l'invention.
La figure 4 est un deuxième schéma de principe du deuxième mode de réalisation d'un dispositif de signalisation selon invention.
Les figures 5A et 5B sont des ordinogrammes détaillant un mode d'exécution d'un procédé de fonctionnement du premier mode de réalisation du dispositif de signalisation selon invention.
La figure 6 est un ordinogramme détaillant un mode d'exécution d'un procédé de fonctionnement du deuxième mode de réalisation du dispositif de signalisation selon invention.

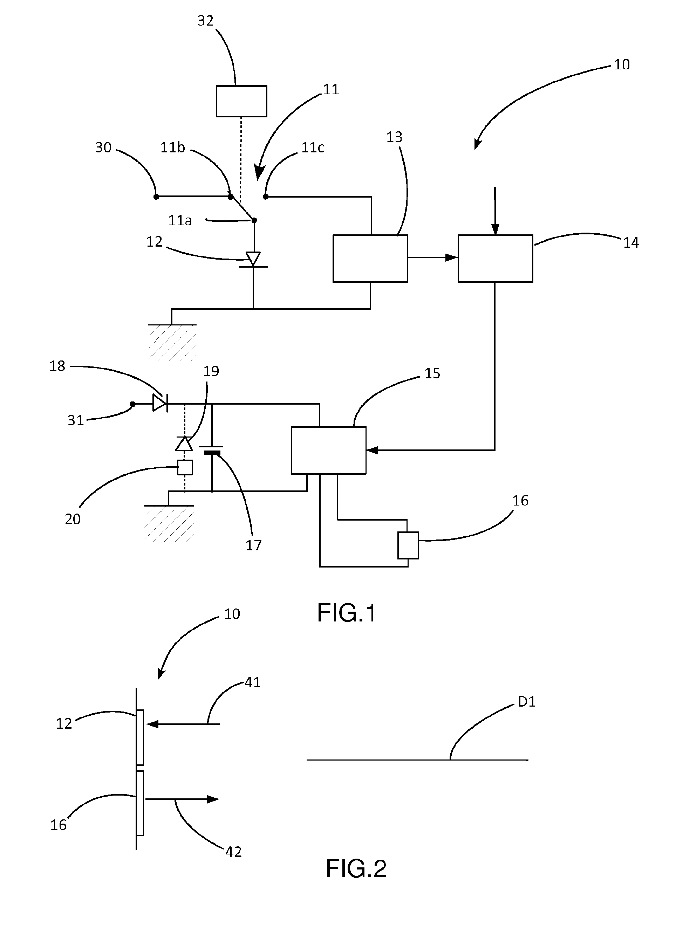

Un premier mode de réalisation d'un dispositif 10 de signalisation d'un véhicule automobile représenté à la figure 1 comprend principalement :
- une première source de lumière 16 alimentée par une unité 15 comprenant un convertisseur de tension ;
- une deuxième source de lumière 12 ;
- un capteur de lumière 12, 13, et
- une unité de commande 14 commandant l'unité 15.

De préférence, dans ce premier mode de réalisation, la deuxième source de lumière 12 comprenant une diode électroluminescente est alimentée par une tension entre une première borne 30 et une masse, au travers d'un interrupteur 11.L'interrupteur 11 permet dans une première position, représentée à la figure 1 et reliant les bornes 11a et 11b, d'alimenter la diode 12 grâce à la tension précédemment mentionnée. Ainsi, dans cette position de l'interrupteur, la deuxième source de lumière émet des rayons permettant de signaler la position du véhicule automobile. Dans la deuxième position, l'interrupteur 11 relie les bornes 11a et 11c et connecte en série la diode 12 et une unité de mise en forme d'un signal 13. Ainsi, dans la deuxième position de l'interrupteur, la diode électroluminescente fonctionne comme un générateur électrique. En effet, lorsque celle-ci est éclairée par des rayons lumineux, elle produit entre ces bornes une tension électrique. Cette tension électrique est appliquée aux bornes de l'unité de mise en forme 13 et un signal, dépendant de cette tension, est généré dans l'unité de mise en forme et transmis à l'unité de commande 14. Le signal transmis à l'unité de commande 14 est bien entendu utilisé par celle-ci pour commander ou non l'allumage de la première source de lumière 16. Ainsi, dans cette deuxième position de l'interrupteur, la diode 12 et l'unité de mise en forme 13 forment un capteur de lumière.

L'interrupteur 11 est du type commandé. Il est de préférence réalisé grâce à un ou plusieurs transistors. Il est avantageusement piloté pour occuper sélectivement et alternativement la première position et la deuxième position. Un circuit de commande 32 est utilisé à cette fin. De préférence, la durée durant laquelle l'interrupteur occupe la deuxième position est courte, notamment inférieure à la durée de persistance rétinienne, c'est-à-dire typiquement inférieure à 0,05 s.

Dans une première variante, le dispositif de signalisation est alimenté, lorsqu'il est activé, par une source de tension continue et permanente entre la borne 30 et la masse. La durée durant laquelle l'interrupteur occupe la première position, soit en reliant les bornes 11a et 11b, est de préférence beaucoup plus longue, que le durée où l'interrupteur occupe la deuxième position, afin de maintenir une puissance moyenne d'alimentation de la deuxième source de lumière 12 suffisante pour assurer la fonction de signalisation, par exemple au moins deux fois plus longue, de préférence cinq fois plus longue, de préférence dix fois plus longue. Avantageusement, cette durée d'occupation de la première position est inférieure à 2s, de préférence inférieure à 1s, de préférence inférieure à 0.3s. Ainsi, un observateur de la deuxième source de lumière ne se rend pas compte qu'elle est, entre deux activations, éteinte pendant la durée dans laquelle l'interrupteur occupe la deuxième position, la perte de flux moyen occasionnée par les extinctions de la source 12 reste négligeable et le temps de réaction du système est imperceptible.

Dans une deuxième variante, le dispositif de signalisation est, lorsqu'il est activé, alimenté entre la borne 30 et la masse, grâce à une alimentation à découpage utilisant par exemple une technique de modulation de la largeur d'impulsion (en anglais PWM). Dans ce cas, la puissance fournie pendant les phases d'alimentation est calculée en fonction du rapport cyclique de sorte que la puissance finalement fournie à la diode soit adéquate. Par ailleurs, dans ce cas, il est avantageux de prévoir un moyen de synchronisation de l'interrupteur 11 et de l'alimentation de sorte que l'interrupteur 11 occupe sa deuxième position pendant les phases de non-alimentation et occupe sa première position pendant les phases d'alimentation. Ainsi, le fait que l'interrupteur occupe la deuxième position, en reliant les bornes 11a et 11c, n'aura pas d'impact sur la puissance fournie à la diode 12.

L'unité de commande 14 commande l'allumage de la deuxième source de lumière 16 via l'unité 15 comprenant le convertisseur de tension. Cette unité 15 est alimentée par la tension de la batterie du véhicule automobile entre une deuxième borne 31 et la masse au travers d'une diode 18. Un moyen de stockage d'énergie électrique 17 comme une pile rechargeable ou un supercondensateur est branché en parallèle aux bornes de l'unité 15. L'élément de stockage d'énergie électrique 17 peut aussi être non rechargeable, comme une pile.

Ainsi, l'unité 15 est alimentée en permanence par la tension de la batterie ou, en cas de défaillance de la batterie, par le moyen de stockage 17. La tension disponible aux bornes d'entrée de l'unité 15 est convertie ou adaptée pour alimenter en sortie la deuxième source de lumière avec un signal électrique adéquat. L'unité de commande 14 commande la présence ou non de la tension d'alimentation de la deuxième source de lumière aux bornes de sortie de l'unité 15. Toute technologie de convertisseur de tension ou d'adaptateur de tension peut être utilisée, notamment un convertisseur abaisseur de type hacheur.

Complémentairement, un moyen photovoltaïque 20 comme un panneau photovoltaïque peut être utilisé pour charger le moyen de stockage 17. De préférence, le moyen photovoltaïque est branché en série avec une diode 19, l'ensemble moyen photovoltaïque 20 et diode 19 est connecté, en aval de la diode 18, en parallèle avec le moyen de stockage 17 et avec l'unité 15.

De préférence, l'unité de commande 14 reçoit un signal de lumière ambiante. Ainsi, l'allumage de la deuxième source peut être interdit lorsque l'intensité de la lumière ambiante dépasse un seuil donné.

De préférence, la première source de lumière et la deuxième source de lumière sont disposées côte à côte sur le véhicule automobile ou à proximité l'une de l'autre.

Avantageusement, la première source de lumière et la deuxième source de lumière émettent au moins sensiblement selon la même direction. Ainsi, le fonctionnement du dispositif de signalisation 10 est le suivant : lorsque la diode 12 est éclairée par des rayons lumineux, par exemple des rayons lumineux émis par un dispositif d'éclairage d'un autre véhicule automobile, selon au moins sensiblement la direction évoquée précédemment, cet éclairement est détecté par le capteur de lumière, notamment l'unité de mise en forme 13, lors d'une période dans laquelle l'interrupteur 11 se trouve dans la deuxième position. L'unité de mise en forme 13 produit un signal qui est transmis à l'unité de commande 14 qui envoie un signal d'activation ou d'allumage de la deuxième source de lumière 16. La deuxième source de lumière émet alors des rayons lumineux au moins sensiblement dans la direction selon laquelle les rayons lumineux ont été reçus. En revanche, lorsque la diode 12 n'est plus éclairée par les rayons lumineux, cette absence d'éclairement est également détectée par l'unité de mise en forme 13 lors d'une période dans laquelle l'interrupteur 11 se trouve dans la deuxième position. L'unité de mise en forme 13 ne produit alors plus de signal et l'allumage de la deuxième source de lumière 16 est alors désactivé par l'unité de commande 14. Ainsi, le fonctionnement d'un catadioptre est reproduit.

Comme représenté à la figure 2, le premier mode de réalisation du dispositif de signalisation permet de détecter des rayons lumineux 41 arrivant au niveau du capteur selon une direction au moins sensiblement parallèle à une direction D1, et permettant, lorsque de tels rayons sont détectés, d'émettre des rayons lumineux 42, grâce à la première source de lumière, selon une direction au moins sensiblement parallèle à la direction D1, dans un sens opposé à celui des rayons lumineux 41.

De préférence, la première source de lumière 12 comprend une diode électroluminescente, notamment une diode électroluminescente organique, en particulier une diode électroluminescente organique souple. De préférence, la deuxième source de lumière 16 comprend une diode électroluminescente, notamment une diode électroluminescente organique, en particulier une diode électroluminescente organique souple.

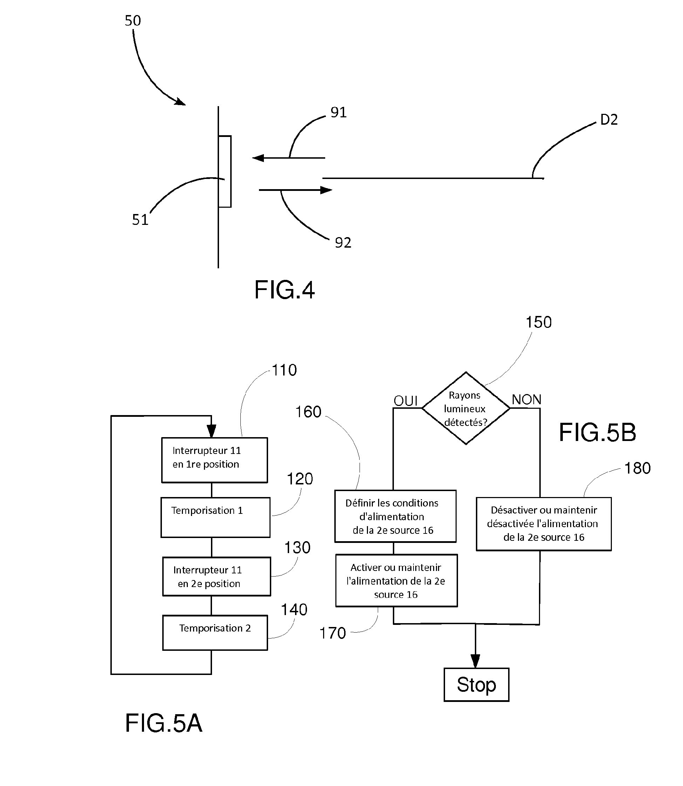

Un exemple de mode d'exécution d'un procédé de fonctionnement du premier mode de réalisation du dispositif de signalisation décrit précédemment est expliqué ci-après en référence aux ordinogrammes des figures 5A et 5B.

Dans une première étape 110, on positionne l'interrupteur 11 dans sa première position.

Dans une deuxième étape 120, on maintient l'interrupteur 11 dans sa première position pendant une temporisation Temporisation 1, par exemple de l'ordre 0.3 s comme vu précédemment.

Dans une troisième étape 130, on positionne l'interrupteur 11 dans sa deuxième position.

Dans une quatrième étape 140, on maintient l'interrupteur 11 dans sa deuxième position pendant une temporisation Temporisation 2, par exemple plus courte que la temporisation Temporisation 1, notamment inférieure à la durée de persistance rétinienne, c'est-à-dire typiquement inférieure à 0,05 s comme vu précédemment, puis on boucle sur l'étape 110.

Pendant l'étape 140,on teste, pendant cette durée de temporisation Temporisation 2, dans une cinquième étape 150, si des rayons lumineux sont détectés, c'est-à-dire si une intensité lumineuse supérieure à une intensité lumineuse donnée est détectée dans une direction donnée, par exemple la direction D1. L'intensité lumineuse donnée peut dépendre des conditions extérieures. Ce test est réalisé de préférence grâce au capteur de lumière décrit précédemment. Si le test est négatif, on passe à une étape 180 dans laquelle on désactive la deuxième source de lumière 16. La deuxième source de lumière 16 est maintenue désactivée si elle n'était pas activée avant l'étape 180. Par contre, si le test est positif, on passe à une étape 160.

Dans l'étape 160, on détermine ou on définit les conditions d'alimentation électrique de la deuxième source de 16. Ceci est par exemple réalisé par des moyens de traitement inclus dans l'unité de commande 14. Ces conditions sont par exemple dépendantes de l'intensité lumineuse courante des rayons lumineux détectés et/ou de l'intensité lumineuse ambiante courante et/ou de l'intensité lumineuse moyenne des rayons lumineux détectés au cours d'une période antérieure.

Dans une étape 170, on active l'alimentation de la deuxième source 16 avec les conditions d'alimentation électrique déterminées ou définies à l'étape précédente.

Une branche de l'ordinogramme 5B est donc parcourue ou exécutée au moins une fois lors de chaque étape 140.

Optionnellement, ce mode d'exécution de procédé de fonctionnement peut n'être mis en oeuvre que lorsque l'intensité lumineuse ambiante est inférieure à un seuil, notamment la nuit, dans un tunnel ou par temps sombre.

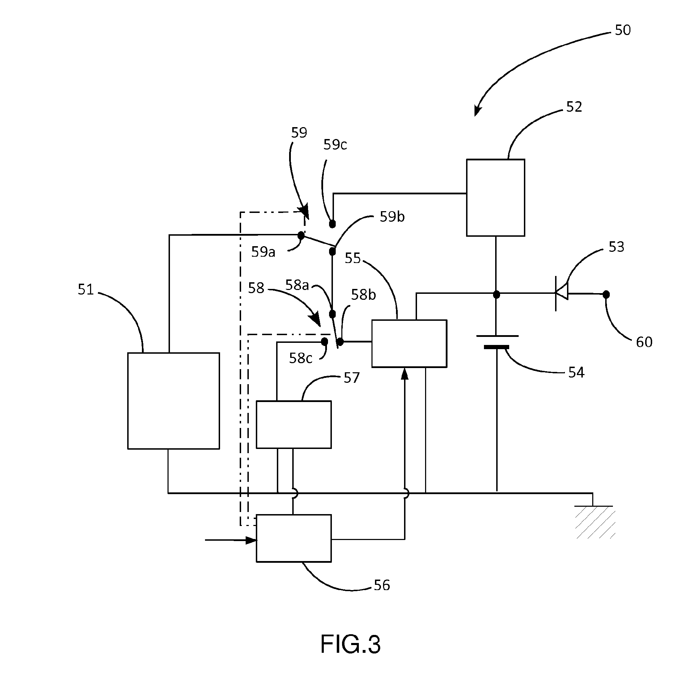

Un deuxième mode de réalisation d'un dispositif 50 de signalisation d'un véhicule automobile représenté à la figure 3 comprend principalement :
- une source de lumière 51 comprenant une diode électroluminescente ;
- un capteur de lumière 51 et 57, le capteur comprenant une unité 57 de mise en forme de signal et
- une unité de commande 56 commandant une unité de conversion de tension 55, un premier interrupteur commandé 58 et un deuxième interrupteur commandé 59.

Le dispositif de signalisation 50 est alimenté par la tension de la batterie du véhicule automobile entre une borne 60 et la masse. Un moyen de stockage d'énergie électrique 54 comme une pile rechargeable ou un supercondensateur est branché en aval d'une diode 53 de sorte à être chargé par la tension de la batterie au travers de la diode 53. Ainsi, l'unité de conversion de tension 55 est alimentée en permanence par la tension de la batterie ou en cas de défaillance de la batterie par le moyen de stockage 54. La tension disponible aux bornes d'entrée de l'unité de conversion de tension 55 est convertie ou adaptée pour alimenter en sortie la source de lumière 51 avec un signal électrique adéquat.

L'unité de commande 56 commande l'allumage de la source de lumière 51 via l'unité 55 comprenant le convertisseur de tension et commande les interrupteurs commandés 58 et 59.

Le moyen de stockage d'énergie électrique 54 alimente, lorsque l'interrupteur commandé 58 se trouve dans une première position reliant les bornes 58a et 58b et lorsque l'interrupteur commandé 59 se trouve dans une première position reliant les bornes 59a et 59b, la source de lumière 51 au travers de l'unité 55. Dans ces positions des interrupteurs commandés (représentées à la figure 3), la source de lumière peut donc émettre des rayons permettant de signaler la position du véhicule automobile.

Lorsque l'interrupteur commandé 59 est dans sa première position reliant les bornes 59a et 59b et que l'interrupteur commandé 58 est dans sa deuxième position reliant les bornes 58a et 58c, l'interrupteur 58 connecte en série la diode 51 et l'unité de mise en forme d'un signal 57. Ainsi, dans ces positions des interrupteurs, la source de lumière 51 fonctionne comme un générateur électrique. En effet, lorsque celle-ci est éclairée par des rayons lumineux, elle produit entre ces bornes une tension électrique. Cette tension électrique est appliquée aux bornes de l'unité de mise en forme 57 d'un signal, et un signal, dépendant de cette tension, est généré dans l'unité de mise en forme et transmis à l'unité de commande 56. Le signal transmis à l'unité de commande 56 est bien entendu utilisé par celle-ci pour commander ou non l'allumage de la source de lumière. Ainsi, dans ces positions des interrupteurs, la source de lumière 51 et l'unité de mise en forme 57 constituent un capteur de lumière.

De préférence, l'interrupteur 58 est réalisé grâce à un ou plusieurs transistors. Il est avantageusement piloté par l'unité de commande pour occuper sélectivement et alternativement la première position et la deuxième position. De préférence, la durée durant laquelle l'interrupteur occupe la deuxième position est courte, notamment inférieure à la durée de persistance rétinienne, c'est-à-dire typiquement inférieure à 0,05 s.

Dans une première variante, la durée durant laquelle l'interrupteur occupe la première position est de préférence beaucoup plus longue que la durée où l'interrupteur occupe la deuxième position, afin de maintenir une puissance moyenne d'alimentation de la source suffisante pour assurer la fonction de signalisation, par exemple au moins deux fois plus longue, de préférence cinq fois plus longue, de préférence dix fois plus longue. Avantageusement, cette durée est inférieure à 2s, de préférence inférieure à 1s, de préférence inférieure à 0.3s. Ainsi, un observateur de la source de lumière ne se rend pas compte qu'elle est éteinte pendant la durée dans laquelle l'interrupteur 58 occupe la deuxième position, la perte de flux moyen occasionnée par les extinctions de la source 51 reste négligeable et le temps de réaction du système est imperceptible.

Optionnellement, l'interrupteur 58 peut occuper la deuxième position reliant les bornes 58a et 58c aussi longtemps que la source de lumière ne doit pas être utilisée pour recharger le moyen de stockage d'énergie électrique 54 ou pour émettre des rayons lumineux. Lorsqu'il n'est *a priori* pas nécessaire de devoir allumer la source de lumière, cette source de lumière peut être utilisée pour recharger le moyen de stockage d'énergie électrique et l'interrupteur 59 peut donc occuper la deuxième position reliant les bornes 59a et 59c. Par exemple, l'interrupteur 59 peut rester dans cette position aussi longtemps que le niveau d'intensité lumineuse ambiante est supérieur à un seuil déterminé. Dans le cas où le niveau d'intensité lumineuse ambiante est inférieur au seuil précédemment mentionné et où la source de lumière doit être utilisée pour émettre des rayons lumineux, l'interrupteur 59 est amené dans sa première position et l'interrupteur 58 est commandé pour occuper ses première et deuxième positions par exemple comme expliqué au paragraphe précédent.

Lorsque l'interrupteur commandé 59 est dans sa deuxième position reliant les bornes 59a et 59c (quelle que soit la première position du premier interrupteur commandé 58), la source de lumière 51 est utilisée comme un moyen photovoltaïque pour charger le moyen de stockage 54 via un convertisseur de tension 52, notamment un convertisseur élévateur de tension. Comme dans le premier mode de réalisation, ces derniers moyens sont optionnels. En effet, le convertisseur de tension 52 et l'interrupteur 59 peuvent être supprimés. Dans ce cas, la borne commune de l'interrupteur 58 est directement reliée à la source de lumière 51. L'élément 54 peut être un moyen de stockage d'énergie électrique non rechargeable comme une pile.

Ainsi, le fonctionnement du dispositif de signalisation 50 est le suivant : lorsque la source de lumière 51 est éclairée par des rayons lumineux, par exemple des rayons lumineux émis par un dispositif d'éclairage d'un autre véhicule automobile, selon au moins sensiblement la direction dans laquelle elle émet elle-même des rayons lumineux, cet éclairement est détecté par l'unité de mise en forme 57 lors d'une période dans laquelle l'interrupteur 58 se trouve dans la deuxième position. L'unité de mise en forme 57 produit un signal qui est transmis à l'unité de commande 56 qui envoie un signal d'activation ou d'allumage de la source de lumière 51. Cette source de lumière émet alors des rayons lumineux au moins sensiblement dans la direction selon laquelle les rayons lumineux ont été reçus. En revanche, lorsque la source de lumière 51 n'est plus éclairée par les rayons lumineux, cette absence d'éclairement est également détectée par l'unité de mise en forme 57 lors d'une période dans laquelle l'interrupteur 58 se trouve dans la deuxième position. L'unité de mise en forme 57 ne produit alors plus de signal et l'allumage de la source de lumière 51 est alors désactivé par l'unité de commande 56. Ainsi, le fonctionnement d'un catadioptre est reproduit.

De préférence, l'unité de commande 56 reçoit un signal de lumière ambiante. Ainsi, l'allumage de la source 51 peut être interdit lorsque l'intensité lumineuse ambiante dépasse un seuil donné. Dans ce cas, l'interrupteur 59 est de préférence commuté en deuxième position, de sorte que le moyen de stockage d'énergie est rechargé par la source de lumière 51.

Comme représenté à la figure 4, le deuxième mode de réalisation du dispositif de signalisation permet de détecter des rayons lumineux 91 arrivant au niveau du capteur 51 selon une direction au moins sensiblement parallèle à une direction D2, et permettant, lorsque de tels rayons sont détectés, d'émettre des rayons lumineux 92, grâce à la source de lumière 51, selon une direction au moins sensiblement parallèle à la direction D2, dans un sens opposé à celui des rayons lumineux 92.

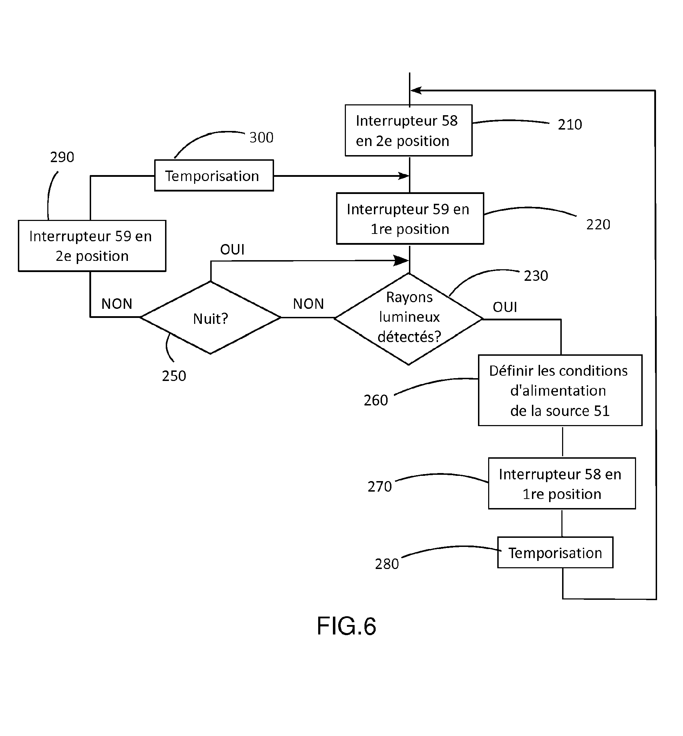

Un exemple de mode d'exécution d'un procédé de fonctionnement du deuxième mode de réalisation du dispositif de signalisation décrit précédemment est expliqué ci-après en référence à l'ordinogramme de la figure 6.

Dans une première étape 210, on positionne l'interrupteur 58 dans sa deuxième position.

Dans une deuxième étape 220, on positionne l'interrupteur 59 dans sa première position.

Dans une étape 230, on teste si des rayons lumineux sont détectés. Pour ce faire, on teste par exemple si une intensité lumineuse supérieure à une intensité lumineuse donnée est détectée dans une direction donnée, par exemple la direction D2. Ce test est réalisé de préférence grâce au capteur de lumière décrit précédemment. Si le test est négatif, on passe à une étape 250. Par contre, si le test est positif, on passe à une étape 260.

Dans l'étape 250, on teste si la luminosité correspond à une forte luminosité, telle que la lumière extérieure de jour, ou à luminosité basse, tel que la pénombre, par exemple dans un tunnel ou de nuit. L'étape 250 permet donc par exemple de distinguer s'il fait jour ou s'il fait nuit. On procède par exemple par comparaison à un seuil de luminosité ambiante ou grâce aux informations fournies à l'organe de commande 56 par des capteurs présents sur le véhicule en dehors du système. S'il fait nuit, on boucle sur l'étape 230 de détection des rayons lumineux.

Par contre, s'il fait jour, on passe à une étape 290, dans laquelle on positionne l'interrupteur 59 dans sa deuxième position, reliant les bornes 59a et 59c. Ainsi, la source de lumière peut être utilisée pour recharger le moyen de stockage d'énergie électrique 54, notamment pendant une temporisation définie par une étape 300. Puis, on boucle sur l'étape 220, dans laquelle on positionne l'interrupteur 59 dans sa première position.

Dans l'étape 260, on détermine ou on définit les conditions d'alimentation électrique de la source de lumière 51. Ceci est par exemple réalisé par des moyens de traitement inclus dans l'unité de commande 56. Ces conditions sont par exemple dépendantes de l'intensité lumineuse courante ou instantanée des rayons lumineux détectés et/ou de l'intensité lumineuse ambiante courante ou instantanée et/ou de l'intensité lumineuse moyenne des rayons lumineux détectés au cours d'une période antérieure.

Puis, dans une étape 270, on positionne l'interrupteur 58 dans sa première position. La source de lumière 51 est alors activée avec des conditions d'alimentation électrique définies à l'étape 250. Cette activation est maintenue au cours d'une étape de temporisation de 280.

On boucle ensuite sur l'étape 210.

Dans les différents modes de réalisation, l'unité de commande peut comprendre un microcontrôleur ou peut consister en un microcontrôleur.

Dans n'importe quel mode de réalisation, de préférence, le capteur de lumière ou l'unité de commande comprend des moyens de traitement permettant d'identifier la nature de la source des rayons lumineux qui sont reçus par le capteur de sorte à commander l'activation de la source de lumière en fonction de cette nature. Par exemple, si les rayons lumineux reçus sont des rayons solaires ou si les rayons lumineux reçus proviennent d'un éclairage public, il n'est pas nécessaire d'allumer la source de lumière. Au contraire, si les rayons lumineux reçus sont des rayons lumineux émis par un système d'éclairage d'un autre véhicule automobile, il est impératif d'allumer la source de lumière. Les moyens de traitement peuvent comprendre des moyens d'analyse spectrale.

Dans n'importe quel mode de réalisation, des moyens de traitement, par exemple inclus dans l'unité de commande, permettent d'allumer la source de lumière de sorte qu'elle émette une intensité lumineuse proportionnelle à l'intensité lumineuse des rayons lumineux reçus par le capteur. L'unité de commande comprend alors un moyen de génération d'un ordre de commande d'allumage comprenant une consigne d'intensité d'allumage de la source de lumière.

Dans n'importe quel mode de réalisation, des moyens de traitement, par exemple inclus dans l'unité de commande, permettent d'allumer la source de lumière de sorte qu'elle émet une intensité lumineuse proportionnelle à la différence entre l'intensité lumineuse des rayons lumineux reçus instantanément et l'intensité lumineuse moyenne des rayons lumineux reçus pendant une période antérieure donnée, par exemple la dernière minute, voire les 2 dernières minutes, voire les 5 dernières minutes. Dès lors, les moyens de traitement comprennent des moyens de calcul pour déterminer l'intensité lumineuse des rayons lumineux reçus instantanément, des moyens de calcul pour déterminer l'intensité lumineuse moyenne des rayons lumineux reçus pendant la période antérieure donnée, des moyens de mémoire et des moyens de comparaison. L'unité de commande comprend alors également un moyen de génération d'un ordre de commande d'allumage comprenant une consigne d'intensité d'allumage de la source de lumière.

Dans n'importe quel mode de réalisation, le dispositif de signalisation comprend avantageusement plusieurs premières sources lumineuses. Ces premières sources de lumière peuvent être des diodes électroluminescentes ou encore des sources surfaciques telles que des diodes électroluminescentes organiques. Il est possible de faire suivre le galbe du feu en utilisant des diodes électroluminescentes organiques.

Dans n'importe quel mode de réalisation, le dispositif de signalisation comprend des moyens matériels et/ou logiciels permettant de régir son fonctionnement conformément au procédé de fonctionnement objet de l'invention. Les moyens logiciels peuvent notamment comprendre un moyen de code de programme informatique adapté à la réalisation des étapes du procédé de fonctionnement objet de l'invention, lorsque le programme tourne sur un ordinateur.

Dans les différents modes de réalisation décrits précédemment, les capteurs de lumière sont sensibles selon la direction évoquée. Ils peuvent être sensibles au rayons lumineux contenus dans un cône de lumière présentant un angle d'ouverture d'au plus 110°, voire 100° horizontalement, et d'au plus 30°, voire 20° verticalement.

Dans les différents modes de réalisation décrits précédemment, les capteurs de lumière comprennent une diode électroluminescente également utilisée pour assurer une fonction de signalisation. Le capteur de lumière peut néanmoins, alternativement, être dédié à la détection de la lumière et donc n'assurer aucune autre fonction ou assurer une autre fonction autre qu'une fonction de signalisation.

Dans tout ce texte, le terme « au moins sensiblement » utilisé avec différents *adjectifs* signifie : « *adjectif* » ou « sensiblement *adjectif* », par exemple « au moins sensiblement parallèle » signifie « parallèle » ou « sensiblement parallèle ».

Bien que seulement deux modes de réalisation ont été décrits en détail, il est clair que l'invention peut être mise en oeuvre par la réalisation d'autres modes de réalisation.

## Revendications

1. Procédé de fonctionnement d'un dispositif (10 ; 50) de signalisation d'un véhicule automobile, le dispositif comprenant une première source de lumière (16 ; 51) assurant une fonction de signalisation du véhicule, un capteur de lumière (12, 13 ; 51, 57) et des moyens (14, 15 ; 55, 56, 57, 58) d'activation de la première source de lumière, **caractérisé en ce que** le procédé comprend les étapes suivantes :
- détecter, grâce au capteur de lumière, des rayons lumineux se propageant selon au moins une direction (D1 ; D2) dans un premier sens, puis,
- dans ce cas, activer la première source de lumière de sorte à ce qu'elle émette des rayons lumineux se propageant selon l'au moins une direction dans un deuxième sens opposé au premier sens.

2. Procédé de fonctionnement selon la revendication précédente, **caractérisé en ce qu'**il comprend préalablement à l'étape d'activation de la première source de lumière, une étape de définition ou de détermination de conditions d'alimentation électrique de la première source de lumière.

3. Procédé de fonctionnement selon la revendication précédente, **caractérisé en ce que** les conditions d'alimentation électrique de la première source de lumière dépendent de l'intensité lumineuse des rayons lumineux détectés et/ou de l'intensité lumineuse ambiante et/ou de l'intensité lumineuse moyenne des rayons lumineux détectés au cours d'une période antérieure.

4. Procédé de fonctionnement selon la revendication 2 ou 3, **caractérisé en ce que** les conditions d'alimentation électrique de la première source de lumière sont telles que l'intensité lumineuse des rayons lumineux émis par la première source dépend, selon une fonction croissante, par exemple proportionnelle ou affine, de l'intensité lumineuse des rayons lumineux détectés par le capteur.

5. Procédé de fonctionnement selon la revendication 2 ou 3, **caractérisé en ce que** les conditions d'alimentation électrique de la première source de lumière sont telles que l'intensité lumineuse des rayons lumineux émis par la première source dépend, selon une fonction croissante, de la différence entre l'intensité lumineuse courante des rayons lumineux détectés par le capteur et l'intensité lumineuse moyenne des rayons lumineux détectés au cours d'une période antérieure.

6. Procédé de fonctionnement selon l'une des revendications précédentes, **caractérisé en ce que** la première source de lumière n'est pas activée tant que l'intensité lumineuse ambiante est supérieure à un seuil déterminé.

7. Procédé de fonctionnement selon l'une des revendications précédentes, **caractérisé en ce qu'**on utilise la première source de lumière, notamment une diode de la première source de lumière, comme moyen de charge d'un moyen (54) de stockage d'énergie électrique.

8. Procédé de fonctionnement selon l'une des revendications précédentes, **caractérisé en ce qu'**on utilise la première source de lumière, notamment une diode de la première source de lumière, ou une deuxième source de lumière (12), notamment une diode de la deuxième source de lumière, pour réaliser l'étape de détecter des rayons lumineux se propageant selon au moins une direction (D1 ; D2) dans un premier sens, ledit capteur de lumière comprenant ladite première source de lumière ou ladite deuxième source de lumière.

9. Procédé de fonctionnement selon la revendication précédente, **caractérisé en ce que** la première source de lumière ou la deuxième source de lumière est utilisée comme capteur de lumière pendant une période de durée déterminée, à intervalle de durée déterminée.

10. Procédé de fonctionnement selon l'une des revendications précédentes, **caractérisé en ce que** la première source de lumière ou la deuxième source de lumière est utilisée comme capteur de lumière tant qu'elle ne doit pas être activée pour émettre de la lumière ou pour recharger un moyen de stockage d'énergie électrique.

11. Support d'enregistrement de données lisible par un calculateur sur lequel est enregistré un programme informatique comprenant des moyens de codes de programme informatique de mise en oeuvre des étapes du procédé selon l'une des revendications précédentes.

12. Dispositif (10 ; 50) de signalisation d'un véhicule automobile, comprenant une première source de lumière (16 ; 51) assurant une fonction de signalisation du véhicule, un capteur de lumière (12, 13 ; 51, 57) et des moyens (14, 15 ; 55, 56, 57, 58) d'activation de la première source de lumière, les moyens (14, 15 ; 55, 56, 57, 58) d'activation activant la première source de lumière lorsque le capteur de lumière détecte la présence de rayons lumineux.

13. Dispositif de signalisation selon la revendication précédente, **caractérisé en ce qu'**il comprend des moyens matériels et/ou logiciels de mise en oeuvre du procédé selon l'une des revendications 1 à 10.

14. Dispositif de signalisation selon la revendication 12 ou 13, **caractérisé en ce que** la première source de lumière comprend une diode électroluminescente (12 ; 51), par exemple une diode électroluminescente organique.

15. Programme informatique comprenant un moyen de code de programme informatique adapté à la réalisation des étapes du procédé selon l'une des revendications 1 à 10, lorsque le programme est exécuté sur un ordinateur.
